# EUROPÄISCHE PATENTSCHRIFT

(11) **EP 2 464 892 B1**
(45) Veröffentlichungstag und Bekanntmachung des Hinweises auf die Patenterteilung: **19.06.2013**
(21) Anmeldenummer: 10735242.9
(22) Anmeldetag: 15.07.2010
(51) Int. Cl.: F16H 7/12

(54) **RIEMENSPANNEINHEIT**
BELT TENSIONER
TENDEUR DE COURROIE

(30) Priorität: 13.08.2009 DE 102009037402
(43) Veröffentlichungstag der Anmeldung: 20.06.2012
(73) Patentinhaber: Schaeffler Technologies AG & Co. KG, 91074 Herzogenaurach (DE)
(72) Erfinder: BAUER, Hans, 91452 Wilhermsdorf (DE)
(86) Internationale Anmeldenummer: PCT/EP2010/060219
(87) Internationale Veröffentlichungsnummer: WO 2011/018296

(56) Entgegenhaltungen:
- DE-A1-102005 052 453
- DE-A1-102006 017 287
- DE-A1-102007 015 676
- DE-A1-102007 031 298

## Beschreibung

Die Erfindung betrifft eine Riemenspanneinheit insbesondere für eine Riemenscheibenebene einer Brennkraftmaschine, mit einem drehfest angeordneten Basisteil und einem mittels einer Nabe auf dem Basisteil gelagerten und gegenüber diesem entgegen der Wirkung zumindest einer Torsionsfeder begrenzt um einen Verdrehwinkel relativ verdrehbaren Spannteil, wobei während einer Relatiwerdrehung zwischen Basisteil und Spannteil die zumindest eine Torsionsfeder durch Änderung ihres Durchmessers mittels einer Reibeinrichtung bestehend aus zumindest einem von der zumindest einen Torsionsfeder beaufschlagten Reibsegment und einer an dem Spannteil vorgesehenen Reibfläche einen Reibeingriff ausbildet.

### Hintergrund der Erfindung

Aus der DE 10 2005 052 453 A1 ist eine gattungsgemäße Riemenspanneinheit insbesondere für eine Riemenscheibenebene einer Brennkraftmaschine mit einem ortsfest anzuordnenden Basisteil und einer relativ zu diesem entgegen der Wirkung einer Torsionsfeder wie Schraubenfeder verdrehbaren Spannteil wie Spannhebel mit einer Spannrolle, der in Spannrichtung von der Schraubenfeder beaufschlagt wird, bekannt. Die Torsionsfeder ist mittels eines Endes am Basisteil und mittels des anderen Endes an der Spanneinrichtung aufgenommen, so dass diese bei einer Verdrehung von einer Tangentialkraft beaufschlagt wird und sich bei einer Relativbewegung in Vorspannrichtung der Torsionsfeder bezüglich ihres Durchmessers erweitert und in Entspannrichtung den Durchmesser verringert. Am Außenumfang der Torsionsfeder ist eine durch die Normalkraft der sich erweiternden Torsionsfeder erzeugte Normalkraft gesteuerte Reibeinrichtung vorgesehen, die durch ein von der Torsionsfeder gegenüber einer an dem Spannteil vorgesehenen Reibfläche beaufschlagten Reibsegment gebildet wird.

Eine Riemenspanneinheit der eingangs genannten Art ist ebenfalls aus der DE 10 2007 031 298 A1 bekannt.

Die Auslegung der gattungsgemäßen Riemenspanneinrichtungen bezüglich der Spannung der Torsionsfeder sowie der Dämpfung der Reibeinrichtung erfolgt auf die Nennstellung der Riemenspanneinrichtung im Zugmitteltrieb. Durch die Auslegung der Torsionsfeder wird daher in Vorspannrichtung über einen Verdrehwinkel des Spannteils gegenüber dem Basisteil durch die sich infolge der Relativverdrehung kontinuierlich erhöhende Normalkraft ein steigendes Reibmoment mit zunehmender Dämpfung beobachtet, während in Entspannrichtung der Torsionsfeder infolge des abnehmenden Durchmessers dieser eine sinkende Normalkraft mit abnehmendem Reibmoment auftritt und daher mit zunehmendem Verdrehwinkel in Entspannrichtung eine verschlechterte Dämpfung durch die Reibeinrichtung in Kauf genommen werden muss.

### Aufgabe der Erfindung

Es ergibt sich daher die Aufgabe, eine Riemenspanneinheit vorzuschlagen, die über den gesamten Verdrehwinkel des Spannteils gegenüber dem Basisteil an die Spann- und Dämpfungsanforderungen des Zugmitteltriebs insbesondere an die Eigenschaften der den Zugmitteltrieb antreibenden Brennkraftmaschine angepasst ist.

### Beschreibung der Erfindung

Die Aufgabe wird durch eine Riemenspanneinheit, insbesondere für eine Riemenscheibenebene einer Brennkraftmaschine, mit einem drehfest angeordneten Basisteil und einem auf dem Basisteil gelagerten und gegenüber diesem entgegen der Wirkung zumindest einer Torsionsfeder begrenzt um einen Verdrehwinkel relativ verdrehbaren Spannteil gelöst, wobei während einer Relativverdrehung zwischen Basisteil und Spannteil die zumindest eine Torsionsfeder durch Änderung ihres Durchmessers mittels einer Reibeinrichtung bestehend aus zumindest einem von der zumindest einen Torsionsfeder beaufschlagten Reibsegment und einer an dem Spannteil vorgesehenen Reibfläche einen Reibeingriff ausbildet und die Reibeigenschaften der Reibfläche abhängig vom Verdrehwinkel variierend eingestellt sind. Dabei ist die Reibfläche abhängig vom Verdrehwinkel derart profiliert, dass sich ein Reibradius der Reibfläche abhängig vom Verdrehwinkel ändert.

Durch die Änderungen der Reibeigenschaften der Reibfläche über den Verdrehwinkel kann unabhängig von der Torsionsfeder über den Verdrehwinkel bereitgestellter Normalkraft am entsprechenden Verdrehwinkel das erwünschte Reibmoment der Reibeinrichtung zur Verfügung gestellt werden. Es hat sich herausgestellt, dass - soweit gewünscht - sogar bei sich mit zunehmendem Verdrehwinkel in Entspannrichtung der Torsionsfeder verringerndem Durchmesser der Torsionsfeder und damit sinkender Normalkraft bei entsprechender Ausbildung der Reibeigenschaften der Reibfläche ein über den Verdrehwinkel progressives Reibmoment dargestellt werden kann.

Erfindungsgemäß wird die Reibfläche abhängig vom Verdrehwinkel profiliert. Darunter können im Wesentlichen zwei Arten einer Anpassung der Reibfläche an die sich über den Verdrehwinkel verändernde Normalkraft der Torsionsfeder verstanden werden, die entweder für sich oder in Kombination angewendet werden können.

Die erste Art der Anpassung betrifft eine Änderung des Reibradius der Reibfläche abhängig vom Verdrehwinkel. Hierbei wird von der bekannten zylindrischen Ausführung des Innenumfangs der am Spannteil eingearbeiteten Reibfläche abgewichen und ein an die Anforderungen des gewünschten Reibmoments über den Verdrehwinkel angepasster Innenumfang der Reibfläche vorgesehen. Je nach der Drehrichtung des Spannteils kann dabei mit zunehmendem Verdrehwinkel ein die Normalkraft der Torsionsfeder verstärkendes wie progressives oder ein die Normalkraft abschwächendes wie degressives Reibmoment erzeugt werden. Es versteht sich, dass unabhängig von je nach Drehrichtung abnehmendem und zunehmendem Durchmesser der Torsionsfeder durch entsprechende Ausgestaltung des Reibradius in beide Drehrichtungen des Spannteils abhängig vom Verdrehwinkel auch dieselben Reibkennlinien aufgeprägt werden können.

Gemäß einem vorteilhaften Ausführungsbeispiel können ausgehend von einer Nennstellung kontinuierliche Reibradien vorgesehen sein. So kann beispielsweise in Drehrichtung mit einer Entspannung der Torsionsfeder der Reibradius über den Verdrehwinkel abnehmen. Dies führt im Entspannungsbereich der Torsionsfeder zu einem kompensierenden Effekt der durch den abnehmenden Durchmesser verminderten Normalkraft, so dass das Reibmoment je nach dem Gradienten des über den Verdrehwinkel abnehmenden Reibradius die Degression der Reibleistung gegenüber einer zylindrisch ausgebildeten Reibfläche nicht so stark ausfällt, gleich bleibt oder sich sogar progressiv entwickelt. Alternativ kann vorgesehen sein, den Reibradius in eine Drehrichtung einer Entspannung der Torsionsfeder über den Verdrehwinkel zunehmend vorzusehen, so dass eine gegenüber einer zylindrischen Ausführung der Reibfläche mit über dem Verdrehwinkel konstantem Reibradius auf alle Fälle verstärkt degressiv ausfallende Reibkennlinie vorgesehen werden kann.

Unabhängig von der Ausgestaltung des Reibradius in Entspannrichtung kann in eine Drehrichtung einer Vorspannung der Torsionsfeder der Reibradius über den Verdrehwinkel abnehmend vorgesehen werden, so dass je nach Ausgestaltung des Gradienten des Reibradius über den Verdrehwinkel eine verstärkt progressive Reibkennlinie mit überproportional über den Verdrehwinkel zunehmendem Reibmoment dargestellt werden kann. Eine flachere Reibkennlinie mit schwach progressiver über eine lineare bis hin zu einer degressiven Kennlinie kann mittels eines in die Drehrichtung der Vorspannung der Torsionsfeder über den Verdrehwinkel zunehmenden Reibradius erzielt werden.
Die zweite Art der Änderung der Reibleistung der Reibfläche über den Verdrehwinkel kann mittels einer vom Verdrehwinkel abhängigen Textur der Reibfläche erfolgen. Hierzu kann die mikroskopische Reibfläche über den Verdrehwinkel variiert werden, indem beispielsweise dessen Textur über den Verdrehwinkel variiert wird. Beispielsweise können unterschiedliche Rautiefen oder eine geometrische Ausrichtung der Textur beispielsweise in Form von Schleifriefen oder Rillen oder deren Dichte abhängig vom Verdrehwinkel vorgesehen sein. Weiterhin können den Reibeingriff mit dem Reibsegment bildende positive Flächenanteile gegenüber negativen Flächenanteilen wie Vertiefungen oder Rillen über den Verdrehwinkel variiert werden. Weiterhin kann ein die Reibfläche bildender, am Spannteil vorgesehener axialer Ansatz über den Verdrehwinkel verbreitert oder verschmälert werden, so das über den Verdrehwinkel die Fläche des Reibsegments nur in einem vorgegebenen Verdrehwinkel mit hohem Reibmoment vollständig mit der Reibfläche den Reibeingriff bildet, während er bei anderen Verdrehwinkeln teilweise axial übersteht.
Durch die Profilierung der an dem Basisteil angeordneten Reibfläche, beispielsweise durch die Ausgestaltung einer nicht zylindrischen Form, kann gleichzeitig der Verlauf der Vorspannkraft der Torsionsfeder eingestellt werden, die die Reibfläche gleichzeitig Anlagefläche für die Torsionsfeder ist. Hierbei wird das Moment der Torsionsfeder und damit die sich einstellende Dämpfung positiv verändert. Es ergibt sich dabei insbesondere bei ungünstigen Hebelverhältnissen des Spannhebels, beispielsweise in Grenzlagen des Spannhebels, eine verbesserte auf den Riemen wirkende Riemenkraft. Weiterhin kann hierdurch das Kennfeld der Dämpfung der Riemenspanneinheit gezielt eingestellt werden und/oder ein Spannerschnalzen durch gezieltes Abbremsen des Spannhebels mittels einer progressiven Ausgestaltung des Federmomentes durch eine entsprechende Profilierung der Reibfläche erzielt werden.

### Kurze Beschreibung der Zeichnungen

Eine bevorzugte Ausführungsform der erfindungsgemäß ausgebildeten Riemenspanneinheit wird nachfolgend unter Bezugnahme auf die beigefügten Zeichnungen näher erläutert. Dabei zeigen:
- Figur 1: eine Riemenspanneinheit im Schnitt und
- Figur 2: eine schematische Darstellung eines Ausschnitts einer Riemenspanneinheit mit über den Verdrehwinkel profilierten Reibflächen.

### Ausführliche Beschreibung der Zeichnungen

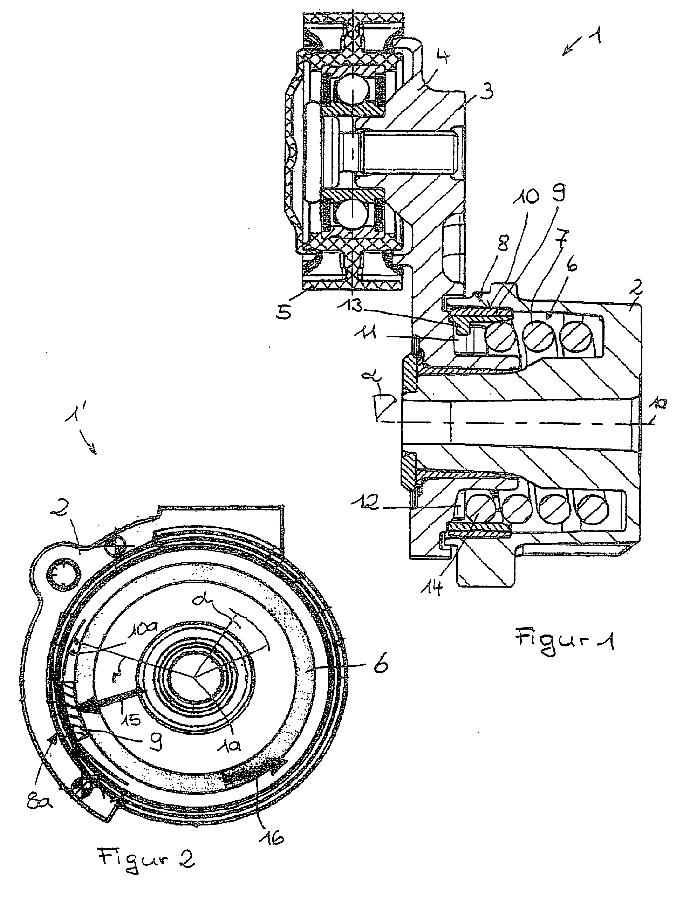

Figur 1 zeigt eine Riemenspanneinheit 1 für einen Zugmitteltrieb nach dem Stand der Technik mit einem ortsfest, beispielsweise an einem Gehäuse einer Brennkraftmaschine angebrachten Basisteil 2 und einem zu diesem begrenzt um die Drehachse 1a verlagerbaren Spannteil 3, das hier als Schwenkarm 4, der die Spannrolle 5 verdrehbar aufnimmt, ausgebildet ist. Die Spannrolle 5 greift in das Umschlingungsmittel, beispielsweise einen Riemen, ein und stellt dessen Vorspannung ein und dämpft in den Zugmitteltrieb eingetragene Schwingungen durch ein Verschwenken des Schwenkarms 4. Eine die Spannung des Umschlingungsmittels ausgleichende Kraft wird dabei zwischen dem Basisteil 2 und dem Schwenkarm 4 durch eine zwischen diesen verspannte Torsionsfeder 6 aufgebracht. Diese ist in dem gezeigten Ausführungsbeispiel durch eine Schraubenfeder 7 gebildet, die an ihrem einen Ende drehschlüssig mit dem Basisteil 2 und an ihrem anderen Ende drehschlüssig mit dem Schwenkarm 4 mittels Mitnahmeeinrichtungen verspannt ist, wobei in der Figur 1 lediglich die axial in Richtung Schraubenfeder 7 angeformte Mitnahmeeinrichtung 11 des Schwenkarms 4 ersichtlich ist.

Zur Dämpfung von im Zugmitteltrieb auftretenden Schwingungen, die die Riemenspanneinheit 1 durch mehr oder weniger rhythmische Verschwenkbewegungen des Schwenkarms 4 belasten, ist während einer Verdrehung wie Teilverdrehung oder Verschwenkung des Schwenkarms 4 gegenüber dem Basisteil 2 eine Reibeinrichtung 8 geschaltet, die aus dem Reibsegment 9 und einer am Innenumfang des Basisteils 2 vorgesehenen komplementär ausgebildeten Reibfläche 10 gebildet ist. Dabei wird das Reibsegment 9 bei einer Relativverdrehung um den Verdrehwinkel α zwischen Schwenkarm 4 und Basisteil 2 von dem Schwenkarm 4 mittels einer weiteren an dem Schwenkarm 4 vorgesehenen Mitnahmeeinrichtung 12, die in einfacherer Bauweise auch von der Mitnahmeeinrichtung 11 für die Schraubenfeder 7 gebildet sein kann, mitgenommen. Diese greift axial in das Reibsegment 9 ein und nimmt dieses an der radial nach innen ausgestellten Lasche 13 drehschlüssig mit. Dabei kann - wie gezeigt - die Lasche 13 in Umfangsrichtung von der Mitnahmeeinrichtung 12 mitgenommen werden, wobei die Lasche 13 in eine als Ausnehmung ausgebildete Mitnahmeeinrichtung 12 axial eingreift und dadurch in beide Drehrichtungen mitgenommen wird.

Das Reibsegment 9 kann unter Vorspannung oder mit geringem Lüftspiel gegenüber der Reibfläche 10 verbaut sein. Die Beaufschlagung des Reibsegments 9 gegenüber der Reibfläche 10 erfolgt mittels einer Normalkraft der Torsionsfeder 6, die sich während einer Verdrehung des Schwenkarms 4 gegenüber dem Basisteil 2 aufweitet. Dabei legen sich eine oder mehrere Windungen 14 der Torsionsfeder 6 an den Innenumfang des Reibsegments 9 an und bestimmen durch die auf diese wirkende Normalkraft der Torsionsfeder 6 das mit dem Verdrehwinkel des Schwenkarms 4 ansteigende Reibmoment zwischen dem Reibsegment 9 und der Reibfläche 10, also zwischen dem Schwenkarm 4 und dem Basisteil 2.

Die Torsionsfeder 6 ist bezüglich ihrer Steifigkeit so ausgelegt, dass der Schwenkarm 4 die Schwingungsmomente des Riemens und eine Vorspannkraft des Riemens gegenhält. Abhängig vom vorgegebenen Bauraum wird die Torsionsfeder 6 bei einem sich infolge von Triebstrangschwingungen verdrehenden Schwenkarm 4 aufgeweitet. Die resultierende, auf die Reibeinrichtung 8 wirkende Normalkraft ist dabei von der Steifigkeit der Torsionsfeder 6 und damit von deren Torsionskraft abhängig.

In der nach dem Stand der Technik ausgebildeten Riemenspanneinheit 1 dargestellten Reibfläche 10 ist um die Drehachse 1a zylindrisch, das heißt, mit konstantem Reibradius ausgestattet, so dass bei einer Verdrehung in Entspannungsrichtung der Torsionsfeder 6 bei sich verkleinerndem Durchmesser das Reibmoment mit zunehmendem Verdrehwinkel α abnimmt und in Vorspannrichtung der Torsionsfeder 6 mit zunehmendem Durchmesser überproportional mit in diese Drehrichtung steigendem Verdrehwinkel α zunimmt.

Figur 2 zeigt schematisch eine der Riemenspanneinheit 1 der Figur 1 bis auf die nachfolgend dargestellten Unterschiede ähnliche Riemenspanneinheit 1' nach dem erfinderischen Gedanken mit dem Basisteil 2 und der von dem nicht näher dargestellten Spannteil bereitgestellten erfindungsgemäß veränderten Reibfläche 10a, die hier nur schematisch angedeutet ist. Die Reibfläche 10a steht in Reibeingriff mit dem Reibsegment 9, das mittels der bei Verdrehung von Spannteil und Basisteil 2 um den Verdrehwinkel α mit der in Richtung des Pfeils 15 wirksamen Normalkraft beaufschlagt wird, wobei sich die Torsionsfeder an ihren Enden am Spannteil einerseits und dem Spannteil 3 (Figur 1) jeweils mittels der entlang des Pfeils 16 wirksamen Tangentialkraft abstützt und sich daher bezüglich ihres Durchmessers aufweitet. Gegenüber der Drehachse 1a weist die Reibfläche 10a einen sich mit dem Verdrehwinkel α ändernden Reibradius r auf. Auf diese Weise wird je nach Ausgestaltung des Reibradius r mit zunehmendem Verdrehwinkel α die winkelabhängige Normalkraft durch die sich in Vorspannrichtung erweiternde beziehungsweise in Entspannrichtung verengende Torsionsfeder 6 kompensiert oder verstärkt. Auf diese Weise können durch Wahl der Ausgestaltung der Profilierung der Reibfläche 10a Kennlinien der Reibeinrichtung 8a eingestellt werden, die nicht durch die Bauart der Riemenspanneinheit 1' vorgegeben sind sondern entsprechend der Eigenschaften des Zugmitteltriebs und der diesen antreibenden Brennkraftmaschine ausgelegt sind.
Es versteht sich, dass bei entsprechend ausgelegter Torsionsfeder 6 deren Durchmesser in Vorspannrichtung verringert und in Entspannrichtung erweitert wird, wobei für derartige Ausgestaltungen eine entsprechend profilierte Reibfläche 10a in gleichem Maße vom erfinderischen Gedanken erfasst ist.

### Bezugszeichen liste

| | |
|---|---|
| 1 | Riemenspanneinheit |
| 1' | Riemenspanneinheit |
| 1a | Drehachse |
| 2 | Basisteil |
| 3 | Spannteil |
| 4 | Schwenkarm |
| 5 | Spannrolle |
| 6 | Torsionsfeder |
| 7 | Schraubenfeder |
| 8 | Reibeinrichtung |
| 8a | Reibeinrichtung |
| 9 | Reibsegment |
| 10 | Reibfläche |
| 10a | Reibfläche |
| 11 | Mitnahmeeinrichtung |
| 12 | Mitnahmeeinrichtung |
| 13 | Lasche |
| 14 | Windung |
| 15 | Pfeil |
| 16 | Pfeil |
| α | Verdrehwinkel |
| r | Reibradius |

## Patentansprüche

1. Riemenspanneinheit (1'), insbesondere für eine Riemenscheibenebene einer Brennkraftmaschine, mit einem drehfest angeordneten Basisteil (2) und einem auf dem Basisteil (2) gelagerten und gegenüber diesem entgegen der Wirkung zumindest einer Torsionsfeder (6) begrenzt um einen Verdrehwinkel (α) relativ verdrehbaren Spannteil (3), wobei während einer Relativverdrehung zwischen Basisteil (2) und Spannteil (3) die zumindest eine Torsionsfeder (6) durch Änderung ihres Durchmessers mittels einer Reibeinrichtung (8a) bestehend aus zumindest einem von der zumindest einen Torsionsfeder (6) beaufschlagten Reibsegment (9) und einer an dem Spannteil (3) vorgesehenen Reibfläche (10a) einen Reibeingriff ausbildet, **dadurch gekennzeichnet, dass** sich die Reibeigenschaften der Reibfläche (10a) abhängig vom Verdrehwinkel (α) ändern, wobei die Reibfläche (10a) abhängig vom Verdrehwinkel (α) derart profiliert ist, dass sich ein Reibradius (r) der Reibfläche (10a) abhängig vom Verdrehwinkel (α) ändert.

2. Riemenspanneinheit (1') nach Anspruch 1, **dadurch gekennzeichnet, dass** in eine Drehrichtung einer Entspannung der Torsionsfeder (6) der Reibradius (r) über den Verdrehwinkel (α) abnimmt.

3. Riemenspanneinheit (1') nach Anspruch 1, **dadurch gekennzeichnet, dass** in eine Drehrichtung einer Entspannung der Torsionsfeder (6) der Reibradius (r) über den Verdrehwinkel (α) zunimmt.

4. Riemenspanneinheit (1') nach einem der Ansprüche 1 bis 3, **dadurch gekennzeichnet, dass** in eine Drehrichtung einer Vorspannung der Torsionsfeder (6) der Reibradius (r) über den Verdrehwinkel (α) abnimmt.

5. Riemenspanneinheit (1') nach einem der Ansprüche 1 bis 3, **dadurch gekennzeichnet, dass** in eine Drehrichtung einer Vorspannung der Torsionsfeder (6) der Reibradius (r) über den Verdrehwinkel (α) zunimmt.

6. Riemenspanneinheit (1') nach einem der Ansprüche 1 bis 5, **dadurch gekennzeichnet, dass** eine Textur der Reibfläche (10a) über den Verdrehwinkel (α) geändert wird.

## Claims

1. Belt tensioning unit (1'), in particular for a belt-pulley plane of an internal combustion engine, having a base part (2) which is arranged in a rotationally fixed manner and a tensioning part (3) which is mounted on the base part (2) and can be turned relative to the latter in a limited manner about a turning angle (α) counter to the action of at least one torsion spring (6), the at least one torsion spring (6) forming a frictional engagement, during a relative rotation between the base part (2) and the tensioning part (3), by way of a change in its diameter, by means of a friction device (8a) comprising at least one friction segment (9), which is loaded by the at least one torsion spring (6), and a friction face (10a) which is provided on the tensioning part (3), **characterized in that** the friction properties of the friction face (10a) change depending on the turning angle (α), the friction face (10a) being profiled depending on the turning angle (α) in such a way that a friction radius (r) of the friction face (10a) changes depending on the turning angle (α).

2. Belt tensioning unit (1') according to Claim 1, **characterized in that** the friction radius (r) decreases over the turning angle (α) in a rotational direction of relief of the torsion spring (6).

3. Belt tensioning unit (1') according to Claim 1, **characterized in that** the friction radius (r) increases over the turning angle (α) in a rotational direction of relief of the torsion spring (6).

4. Belt tensioning unit (1') according to one of Claims 1 to 3, **characterized in that** the friction radius (r) decreases over the turning angle (α) in a rotational direction of prestress of the torsion spring (6).

5. Belt tensioning unit (1') according to one of Claims 1 to 3, **characterized in that** the friction radius (r) increases over the turning angle (α) in a rotational direction of prestress of the torsion spring (6).

6. Belt tensioning unit (1') according to one of Claims 1 to 5, **characterized in that** a texture of the friction face (10a) is changed over the turning angle (α).

## Revendications

1. Unité de tensionnement de courroie (1'), en particulier pour un plan de poulie à courroie d'un moteur à combustion interne, comprenant une partie de base (2) disposée de manière fixée en rotation et une partie de tensionnement (3) montée sur la partie de base (2) et pouvant tourner par rapport à celle-ci à l'encontre de l'action d'au moins un ressort de torsion (6) de manière limitée suivant un angle de rotation (α), l'au moins un ressort de torsion (6), pendant une rotation relative entre la partie de base (2) et la partie de tensionnement (3), effectuant un engagement de friction par variation de son diamètre au moyen d'un dispositif de friction (8a) constitué d'au moins un segment de friction (9) sollicité par l'au moins un ressort de torsion (6) et d'une surface de friction (10a) prévue sur la partie de tensionnement (3), **caractérisée en ce que** les propriétés de friction de la surface de friction (10a) varient en fonction de l'angle de rotation (α), la surface de friction (10a) étant profilée en fonction de l'angle de rotation (α) de telle sorte qu'un rayon de friction (r) de la surface de friction (10a) varie en fonction de l'angle de rotation (α).

2. Unité de tensionnement de courroie (1') selon la revendication 1, **caractérisée en ce que** le rayon de friction (r) diminue sur l'angle de rotation (α) dans une direction de rotation d'une détente du ressort de torsion (6).

3. Unité de tensionnement de courroie (1') selon la revendication 1, **caractérisée en ce que** le rayon de friction (r) augmente sur l'angle de rotation (α) dans une direction de rotation d'une détente du ressort de torsion (6).

4. Unité de tensionnement de courroie (1') selon l'une quelconque des revendications 1 à 3, **caractérisée en ce que** le rayon de friction (r) diminue sur l'angle de rotation (α) dans une direction de rotation d'une précontrainte du ressort de torsion (6).

5. Unité de tensionnement de courroie (1') selon l'une quelconque des revendications 1 à 3, **caractérisée en ce que** le rayon de friction (r) augmente sur l'angle de rotation (α) dans une direction de rotation d'une précontrainte du ressort de torsion (6).

6. Unité de tensionnement de courroie (1') selon l'une quelconque des revendications 1 à 5, **caractérisée en ce qu'**une texture de la surface de friction (10a) est variée sur l'angle de rotation (α).
